# EUROPÄISCHE PATENTSCHRIFT

(11) **EP 0 396 960 B1**
(45) Veröffentlichungstag und Bekanntmachung des Hinweises auf die Patenterteilung: **30.11.1994**
(21) Anmeldenummer: 90107801.4
(22) Anmeldetag: 25.04.1990
(51) Int. Cl.: B65G 61/00, B65G 47/31

(54) **Verfahren und Anlage zum Umordnen von sortenweise palettierten Gegenständen zu Gruppen bestimmter Sortenzusammenstellung**
Method and installation for rearranging objects palletized in classes in to groups of definite sorting composition
Méthode et installation pour réarranger des objets palettisés par sortes en groupes dont la composition des sortes est définie

(30) Priorität: 09.05.1989 DE 3915139
(43) Veröffentlichungstag der Anmeldung: 14.11.1990
(73) Patentinhaber: Focke & Co. (GmbH & Co.), 27283 Verden (DE)
(72) Erfinder: Focke, Heinz, D-27283 Verden (DE)
(74) Vertreter: Bolte, Erich, Dipl.-Ing.

(56) Entgegenhaltungen:
- EP-A- 0 240 812
- DD-A- 159 710
- DD-B- 215 058
- DE-A- 2 062 845
- DE-A- 2 500 786
- DE-A- 3 515 595
- DE-A- 3 524 344
- DE-A- 3 720 933
- DE-B- 1 456 850
- DE-B- 1 708 885
- US-A- 3 724 687
- US-A- 3 917 082

## Beschreibung

Die Erfindung betrifft eine Anlage zum Fördern und Umordnen von Gegenständen unterschiedlicher Sorten, die auf Paletten mit einer bestimmten Gegenstandssorte zumindest je Lage abgesetzt sind, mit einer Depalettierungsstation, zu Sortenspeichern führenden Fördermitteln und von den Sortenspeichern zu einer Gruppenbildungsstation führenden Fördermitteln.

Weiterhin betrifft die Erfindung ein Verfahren zum Fördern und Umordnen von Gegenständen unterschiedlicher Sorten, die auf Paletten mit einer bestimmten Gegenstandssorte zumindest je Lage abgesetzt sind, wobei die Gegenstände in einer Depalettierungsstation lagenweise depalettiert und über Fördermittel sortenrein Sortenspeichern zugeführt werden und wobei die Gegenstände über weitere Fördermittel von den Sortenspeichern einer Gruppenbildungsstation zugeführt werden.

Bei der Herstellung von Massengütern unterschiedlicher Sorten, beispielsweise bei der Herstellung von Süßwaren und Schokoladenartikeln, ist häufig eine verkaufsgerechte Zusammenstellung der unterschiedlichen Sorten unmittelbar im Anschluß an die Herstellung aus verschiedenen Gründen unmöglich. Diese Güter werden daher zunächst sortenweise palettiert und müssen später - gegebenenfalls auch an einem anderen Ort - zu Gruppen aus mehreren Sorten umgeordnet werden. Dieses Umordnen ist in hohem Maße zeit- und arbeitsaufwendig.

Aus der DE-A-3 524 344 ist eine einfache Anlage mit einer Depalettiereinrichtung, mehreren Sortenspeichern und einer Gruppenbildungsstation bekannt. Zusätzlich sind entsprechende Fördermittel vorgesehen.

Der Erfindung liegt die Aufgabe zugrunde, eine Anlage und ein Verfahren anzugeben, mit deren Hilfe das obengenannte Umordnen sicher und effizient durchführbar ist. Dabei soll grundsätzlich darauf geachtet werden, daß die Zusammenstellung von Gegenständen unterschiedlicher Sorten innerhalb einer zu bildenden Gruppe veränderbar ist, das heißt, es soll die Möglichkeit bestehen, kurzfristig Gruppen veränderter Zusammenstellung bilden zu können, ohne den verfahrenstechnischen Ablauf und den grundsätzlichen Aufbau der zu schaffenden Anlage verändern zu müssen.

In vorrichtungstechnischer Hinsicht wird die genannte Aufgabe durch folgende Merkmale gelöst:
- Es sind mehrere Depalettierungsstationen vorgesehen, denen jeweils mehrere Sortenspeicher zugeordnet sind,
- den Gruppenbildungsstationen sind über Gruppenfördermittel aus jedem der vorgesehenen Sortenspeicher Gegenstände zuführbar.

Mittels einer derart ausgebildeten Anlage ist das angestrebte Umordnen von sortenweise palettierten Gegenständen zu Gruppen bestimmter Sortenzusammenstellung problemlos realisierbar. Die Anlage ist bei der Verwendung üblicher Steuerelemente und Steuereinrichtungen automatisch und kontinuierlich betreibbar, so daß das angestrebte Umordnen in höchst effizienter Weise durchführbar ist. Es muß lediglich für die fortlaufende Zuführung von Paletten mit sortenweise palettierten Gegenständen und die Abführung der gebildeten Gruppen samt ihrer Unterlagen einschließlich der Zuführung der Unterlagen Sorge getragen werden. Im übrigen ist eine Umstellung der Umordnung von einer Zusammenstellung der Gruppen auf eine andere Gruppenzusammenstellung jederzeit möglich, ohne die Anlage in ihrer Gesamtheit irgendwie umbauen zu müssen. Es bedarf hierzu lediglich eines Eingriffs in die selbstverständlich zugehörige Steuereinheit, damit der veränderten Zusammenstellung entsprechend ein anderer Abruf von Gegenständen aus den Sortenspeichern und damit zu den Gruppenbildungsstationen erfolgt.

Weitere Merkmale der erfindungsgemäßen Anlage ergeben sich aus den zugehörigen Unteransprüchen.

In verfahrenstechnischer Hinsicht wird die genannte Aufgabe dadurch gelöst, daß jeder in den Sortenspeichern lagernde Gegenstand wahlweise einer von mehreren vorgesehenen Gruppenbildungsstationen zugeführt wird. Mittels dieser Verfahrensweise ist es ohne weiteres möglich, sortenweise auf Paletten angelieferte Gegenstände zunächst sortenweise zu depalettieren, wobei die depalettierten Gegenstände in Sortenspeicher überführt werden, also wiederum sortenweise zwischengespeichert werden. Von den Sortenspeichern werden die Gegenstände so, wie sie für die Zusammenstellung der gewünschten Gruppen benötigt werden, also in der entsprechenden Anzahl und Reihenfolge, abgerufen, beispielsweise durch Betätigung entsprechender Steuerelemente. Die abgerufenen Gegenstände, die sich zuvor bereits auf zu den jeweiligen Sortenspeichern gehörigen Sortenfördermitteln befinden, werden anschließend einer von mehreren Gruppenbildungsstationen zugeführt, wo die für die Bildung einer Gruppe angelieferten einzelnen Gegenstände in der gewünschten geometrischen Anordnung zueinander auf einer Unterlage abgesetzt werden, so daß anschließend eine fertige Gruppe der gewünschten Zusammenstellung zur Verfügung steht. Dieser Umordnungsprozeß läßt sich ohne weiteres kontinuierlich und automatisch gesteuert durchführen, so daß an der mindestens einen Depalettierungsstation nur für die fortlaufende Zuführung von Paletten der unterschiedlichen Gegenstandssorten und an den Gruppenbildungsstationen für die Zuführung der Unterlagen und die Abführung der fertiggebildeten Gruppen Sorge getragen werden muß. Diese Verfahrensweise läßt es generell zu, mehrere Depalettierungsstationen parallel zueinander anzuordnen. Damit kann die Leistungsfähigkeit des Verfahrens praktisch beliebig gesteigert werden und insbesondere an eine gegebenenfalls sehr große Anzahl unterschiedlicher Gegenstandssorten angepaßt werden. Auch besteht von der Verfahrensstruktur her generell die Möglichkeit, kurzfristig auf eine andere Art der Zusammenstellung der Gruppen aus Gegenständen verschiedener Sorten überzugehen. Es bedarf hierzu lediglich einer Abänderung der Abrufbefehle für die Sortenspeicher, in denen im übrigen stets ein Mindestbestand an Gegenständen der betroffenen Sorte aufrechterhalten wird. Zugleich soll aber auch ein gewisser Maximalbestand nicht überschritten werden.

Im Hinblick auf eine tatsächlich sortenweise Zwischenlagerung der palettenweise angelieferten Gegenstände ist dafür Sorge zu tragen, daß jeder Depalettierungsstation nur Paletten einer bestimmten Anzahl unterschiedlicher Gegenstandssorten und nur mit Gegenständen der für die nachgeschalteten Sortenspeicher bestimmten Sorten zugeführt werden.

In der Regel sind innerhalb einer Palettenlage der zugeführten Gegenstände diese in mehreren Reihen angeordnet. Für diesen Fall empfiehlt es sich, im Bereich der Depalettierungsstation für jede Gegenstandsreihe einer Palettenlage ein eigenes Fördermittel vorzusehen bzw. die Gegenstände der einzelnen Reihen über separate Fördermittel abzuführen. Für den Fall von vier parallelen Reihen innerhalb einer Palettenlage sind daher dann vier separate Fördermittel vorzusehen. Diese sollten in zweckmäßiger und vorteilhafter Weiterbildung mit unterschiedlicher Fördergeschwindigkeit betrieben werden. Die Fördergeschwindigkeiten lassen sich dabei problemlos so aufeinander abstimmen, daß die palettierten Gegenstände nicht miteinander kollidieren. Wesentlicher Zweck der unterschiedlichen Fördergeschwindigkeit der mehreren Fördermittel ist es jedoch, die einzelnen Gegenstände so zu führen, daß sie am Ende der Förderstrecke zu einem einzigen Förderstrom von Gegenständen zusammenführbar sind, und zwar zu einer sogenannten Dichtlage, bei der Gegenstand unmittelbar auf Gegenstand folgt. Die unterschiedliche Einstellung der Fördergeschwindigkeiten erlaubt es aber in Verbindung mit zur Bildung des einzigen Förderstroms vorzusehenden Führungen, die die Gegenstände aller Fördermittel so zusammenschieben, daß sich der einheitliche Förderstrom ausbildet, die aus den einzelnen Reihen stammenden Gegenstände um ihre Vertikalachse zu drehen. Dies ist immer dann notwendig, wenn die Gegenstände in den verschiedenen Reihen einer Palettenlage hinsichtlich ihrer Position um ihre Vertikalachse unterschiedlich ausgerichtet sind. Durch das Zusammenbewegen der Gegenstände bei der Bildung des einzigen Förderstroms gelangen die Gegenstände mit einem Teil ihrer Auflagefläche auf ein Nachbarband. Ein gleichzeitig auf zwei Bändern aufliegender Gegenstand erfährt dadurch zwei Fördergeschwindigkeiten mit der Folge, daß der Gegenstand um seine Vertikalachse gedreht wird. Auf diese Weise befinden sich schließlich alle ursprünglich möglicherweise in unterschiedlicher Anordnung bezüglich ihrer Vertikalachse in verschiedenen Reihen einer Palettenlage zugeführten Gegenstände innerhalb des einzigen Förderstroms in einheitlicher Ausrichtung.

Weitere Merkmale des erfindungsgemäßen Verfahrens ergeben sich aus den zugehörigen Unteransprüchen.

Nachfolgend wird die Erfindung weiter ins einzelne gehend anhand eines ausführungsbeispiels der erfindungsgemäßen Anlage unter Bezugnahme auf die Zeichnungen erläutert; in diesen zeigen:
- Fig. 1: eine Draufsicht auf eine erfindungsgemäße Anlage mit drei Depalettierungsstationen jeweils mit drei nachgeordneten Sortenspeichern sowie mit vier Gruppenbildungsstationen,
- Fig. 2: einen Teil der Anlage der Fig. 1,
- Fig. 3: einen anderen Teil der Anlage der Fig. 1,
- Fig. 4: eine vergrößerte Darstellung einer Depalettierungsstation mit vier nachgeordneten Einzelfördermitteln,
- Fig. 5: in schematischer Seitenansicht aus der Richtung des Pfeils A den Teil der Fig. 2,
- Fig. 6: in schematischer Seitenansicht aus der Richtung des Pfeils B den linken Teil der Anlage gemäß Fig. 1,
- Fig. 7: in schematischer Seitenansicht aus der Richtung des Pfeils B den rechten Teil der Anlage gemäß Fig. 2,
- Fig. 8: eine Frontalansicht eines Sortenspeichers,
- Fig. 9: in schematischer Seitenansicht aus der Richtung des Pfeils C das Fördermittel für die Unterlagen und
- Fig. 10: in schematischer Seitenansicht aus der Richtung des Pfeils D einen Abzweigförderer für die Unterlagen.

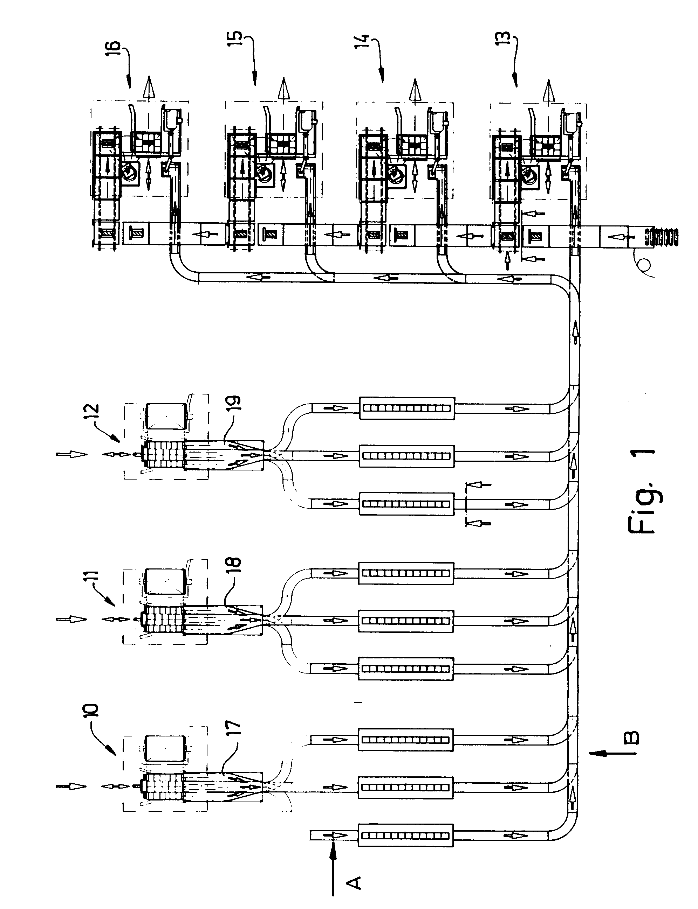

Fig. 1 zeigt in Gesamtdarstellung eine erfindungsgemäße Anlage mit drei Depalettierungsstationen 10, 11 und 12 und vier Gruppenbildungsstationen 13 bis 16. Den Depallettierungsstationen 10, 11 und 12 ist als Einzelfördermittel jeweils ein Mehrfachförderer 17, 18 bzw. 19 nachgeordnet. Diese Mehrfachförderer 17 bis 19 führen je zu drei Sortenförderern 20 bis 22 bzw. 23 bis 25 bzw. 26 bis 28, die ihrerseits je zu einem Sortenspeicher 29 bis 37 und durch diese hindurch bis in den Bereich von vier Gruppenfördermitteln 38 bis 41 führen. Es sind vier Gruppenfördermittel 38 bis 41 in Hinblick auf die vier Gruppenbildungsstationen 13 bis 16 vorgesehen, also je Gruppenbildungsstation ein Gruppenfördermittel.

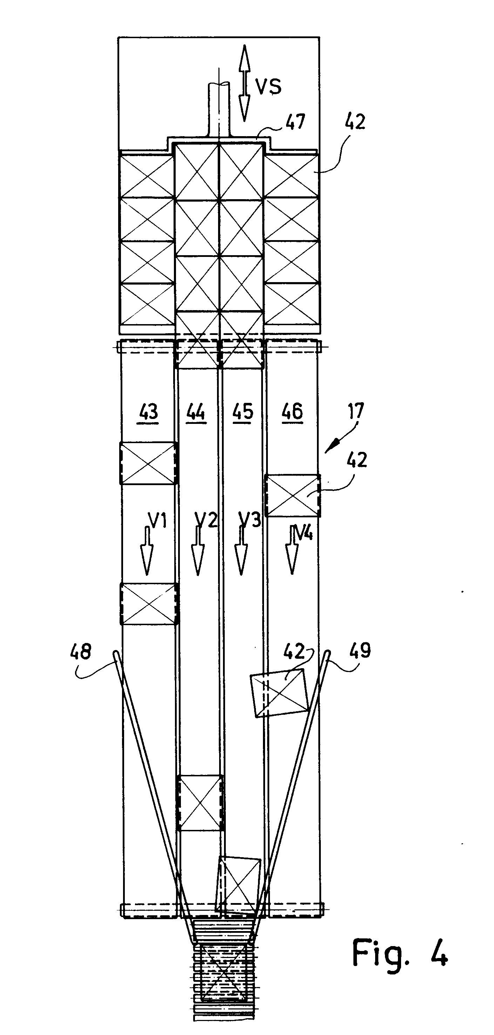

Fig. 4 zeigt eine Depalettierungsstation mit zugehörigem Mehrfachförderer weiter ins Detail gehend, also bspw. die Depalettierungsstation 10 und den zugehörigen Mehrfachförderer 17. In die Depalettierungsstation 10 ist eine mit Gegenständen 42 beladene Palette eingeführt, die über vier parallele Förderbänder 43 bis 46 des Mehrfachförderers 17 zu depalettieren ist. Bei der dargestellten Ausführungsform dient der Depalettierung ein hinter der Palette angeordneter hin und herbewegbarer Schieber 47, mit dessen Hilfe die einzelnen Gegenstände 42 auf die Fördermittel 43 bis 46, die als Bandförderer ausgebildet sind, abschiebbar sind. In Fig. 4 sind bereits verschiedene Gegenstände 42 als auf den Förderbändern 43 bis 46 liegend dargestellt; aus dieser Darstellung ist ersichtlich wie bspw. ein auf dem Förderband 46 laufender Gegenstand 42, der in den Einschnürungsbereich zwischen zwei Seitenführungen 48 und 49 eintritt, im Laufe der Weiterbewegung um seine Vertikalachse verschwenkt wird, so daß er schließlich die am Ende der Förderstrecke der Förderbänder 43 bis 46 erkennbare Position einnimmt.

Die beiden Seitenführungen 48 und 49 sind ursprünglich in einem Abstand voneinander angeordnet, daß alle Förderbänder 43 bis 46 unter ihrem Einzugsbereich durchlaufen können, während am anderen Ende der beiden Seitenführungen 47 und 48 ihr gegenseitiger Abstand etwa auf die Transportbreite der Gegenstände 42 eingeengt ist.

Die Förderbänder 43 bis 46 laufen mit zugehörigen Bandgeschwindigkeiten V1 bis V4; der Schieber 47 wird mit einer Geschwindigkeit Vs betätigt.

Unter beispielhafter Annahme einer Gegenstandslänge von 225 mm und einer angestrebten Leistung der Anlage von 24 bis 28 zu bildenden Gruppen je Minute und der weiteren Annahme des Einsatzes von drei Depalettierungsstationen sowie Totzeiten für die Schieberrückbewegung in die Ausgangsstellung von 0,5 Sek., für das Wegschwenken einer Zwischenlage zwischen den Palettenlagen von 2 Sek., für das Zurückschwenken von Greiferarmen von 2 Sek. und für den Aufbau eines Luftkissens zum Anheben der Palettenlage von 0.5 Sek., also einer Totzeit von insgesamt 5 Sek., stellen sich folgende Ergebnisse ein. 90 Gegenstände lassen sich aus etwa vier Lagen innerhalb von 60 Sek. - 4*5 Sek. 40 Sek abräumen. Damit stehen 10 Sek. für das Abräumen einer Lage von 1200 mm zur Verfügung, so daß sich Vs zu 0,12 m/s ergibt.

Ein zu beachtendes Problem ist folgendes: Die beiden äußeren Gegenstände, nämlich die auf den Förderbändern 43 und 46, müssen bis die inneren Gegenstände, nämlich die auf den beiden Förderbändern 44 und 45, von ihren zugehörigen Förderbändern erfaßt werden, soweit vorgezogen sein, daß sie von den inneren Gegenständen nicht mehr eingeholt werden.

Vs = 120 mm/s entspricht 37 mm in ca. 0,3 s.
Förderband 43 (langsamstes Förderband):
0.3 s führt bei Annahme einer Förderstrecke von 600 mm zu 1800 mm/s.
Förderband 44 muß im Verhältnis zu Förderband 43 einen Förderstreckenvorlauf von 300 mm bei 2400 mm Förderstrecke des Förderbandes 43 haben.
Förderband 44:
Förderband 43 legt in 1,33 s eine Strecke von 2400 mm zurück, während Förderband 44 in der gleichen Zeit eine Strecke von 2700 mm zurücklegt. Dies bedeutet, daß das Förderband 44 mit V2 gleich 2025 mm/s läuft.
Förderband 45:
In 1,33 s müssen 2700 mm (Forderband 44) und 300 mm zurückgelegt werden, also insgesamt 3000 mm. Dies bedeutet, daß das Förderband 45 mit V3 = 2300 mm/s läuft.
Forderband 46:
Dieses Förderband läuft mit Vs = 2075 mm/s.

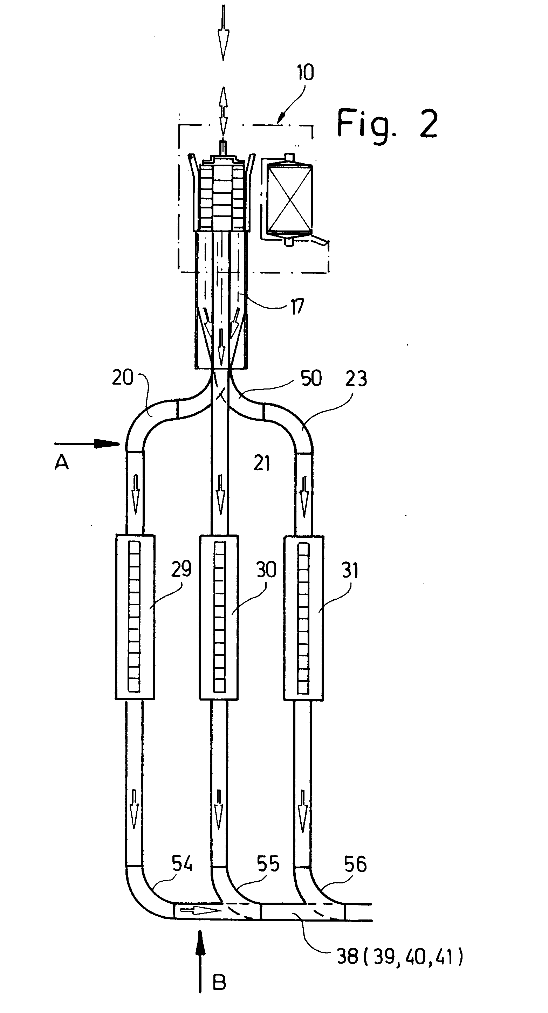

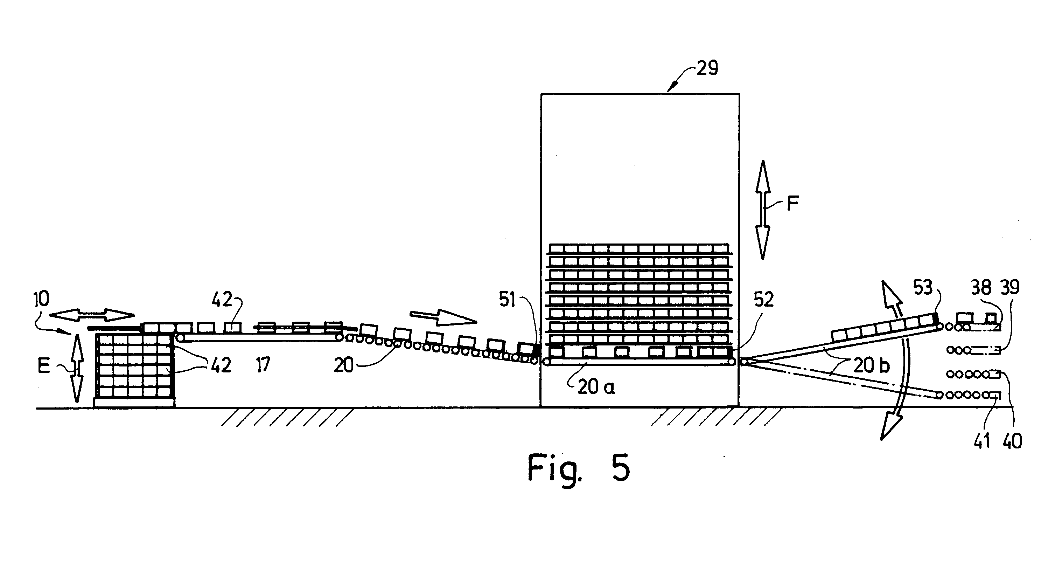

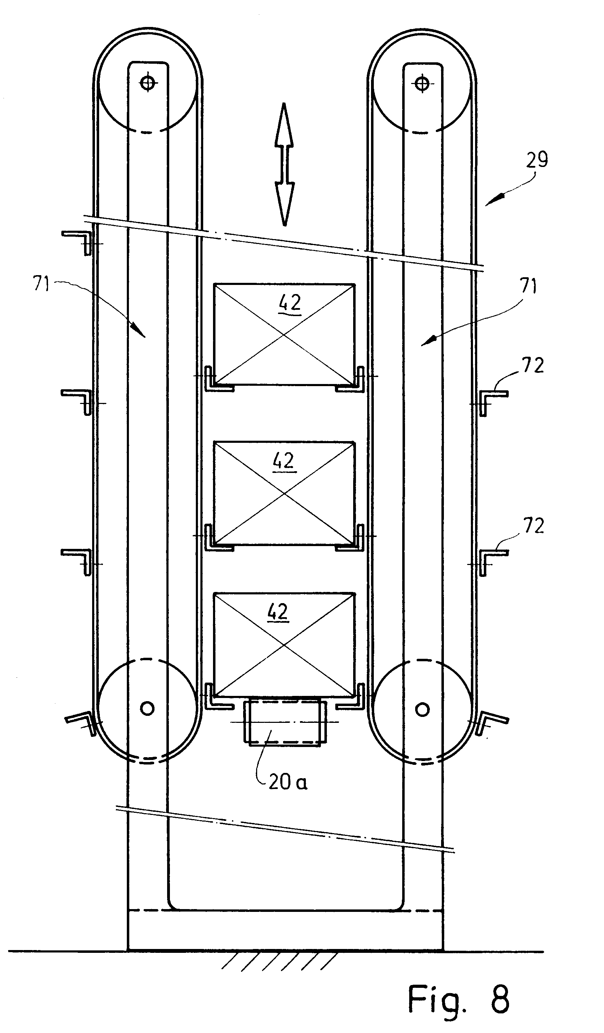

Fig. 5 zeigt in schematischer Seitenansicht aus der Richtung des Pfeils A den Teil der Fig. 2. Deutlich erkennbar ist die nur schematisch dargestellte Depalettierungsstation 10 mit ihrem hin- und herbewegbaren Schieber 47. Selbstverständlich muß die Palette nach jeweiliger Depalettierung einer Palettenlage angehoben werden; dies ist mittels des Pfeils E angedeutet. Weiter erkennbar ist der Mehrfachförderer 17, der gemäß Darstellung in Fig. 4 aus vier Einzelförderern 43 bis 46 besteht. Die nur schematische Darstellung in Fig. 2 läßt den Eindruck entstehen, als wären nur drei Einzelförderer vorgesehen; in der Tat sind jedoch in Hinblick auf die erkennbar nebeneinander liegenden vier Reihen jeder Palettenlage vier Einzelförderer vorgesehen. Der Mehrfachförderer 17 geht über eine in Fig. 5 nicht erkennbare, aber in Fig. 2 schematisch dargestellte Förderweiche 50 in die Sortenförderer 20 bis 22 über, von denen in Fig. 5 nur der Sortenförderer 20 erkennbar ist. Am Ende des Sortenförderers 20, nämlich unmittelbar vor dem zugeordneten Sortenspeicher 29, ist eine Sperre 51 vorgesehen. Diese Sperre 51 dient dazu, über den Sortenförderer 20, der als Rollenstrecke ausgebildet ist, dem Sortenspeicher 29 zugeführte Gegenstände so lange am Eintritt in den Sortenspeicher 29 zu hindern, wie dieser wegen einer Hub- bzw. Absenkbewegung im Sinne des Pfeils F an der momentanen Aufnahme von Gegenständen 42 gehindert ist. Innerhalb des Sortenspeichers 29 setzt sich der Sortenförderer 20 als umlaufendes Förderband 20a fort, über das die nach Freigabe der Sperre 51 zugeführten Gegenstände 42 in den Sortenspeicher 29 einführbar sind. Auch am Ende der Förderstrecke des innerhalb des Sortenspeichers 29 gelegenen Förderbandes 20a ist eine Sperre 52 vorgesehen. Diese Sperre 52 dient der Absperrung der zugeführten Gegenstände 42 gegen einen Austritt aus dem Sortenspeicher 29. Der Sortenspeicher 29 ist als Etagenspeicher ausgebildet und wird weiter unten unter Bezugnahme auf Fig. 8 noch weiter im Detail beschrieben. Hinter dem Sortenspeicher 29 setzt sich der Sortenförderer 20 in einem weiteren Umlaufförderer 20b fort, wobei auch hier am Ende der Förderstrecke eine Sperre 53 vorgesehen ist. Diese Sperre 53 dient der Verhinderung des Weiterlaufs von auf dem Umlaufförderer 20 b befindlichen Gegenständen 42 in Richtung auf die Gruppenförderer 39 bis 41, die je einer der Gruppenbildungsstationen 13 bis 16 zugeordnet sind.

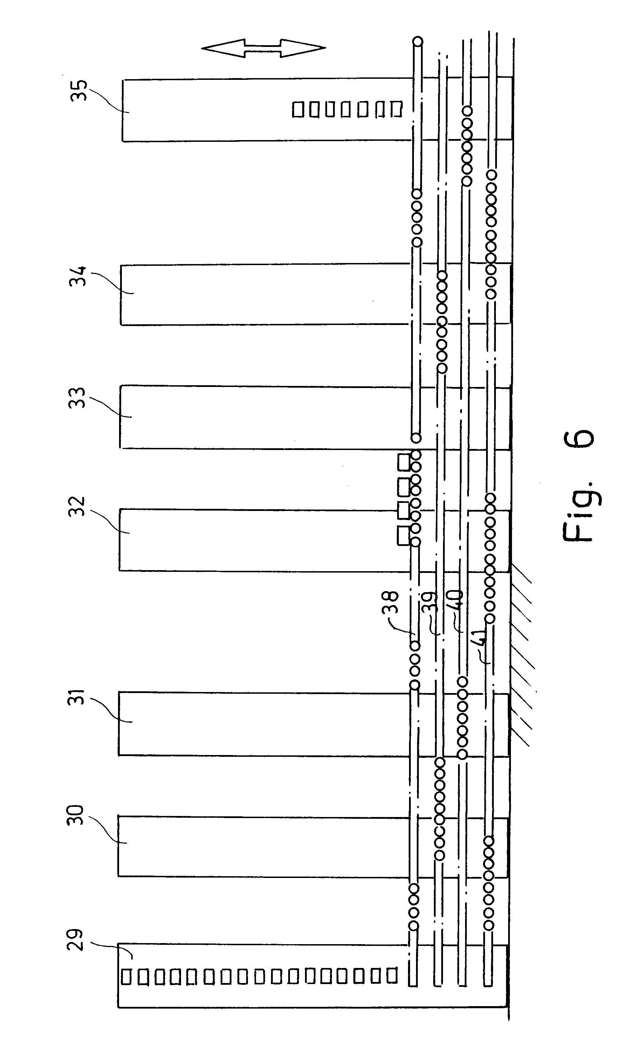

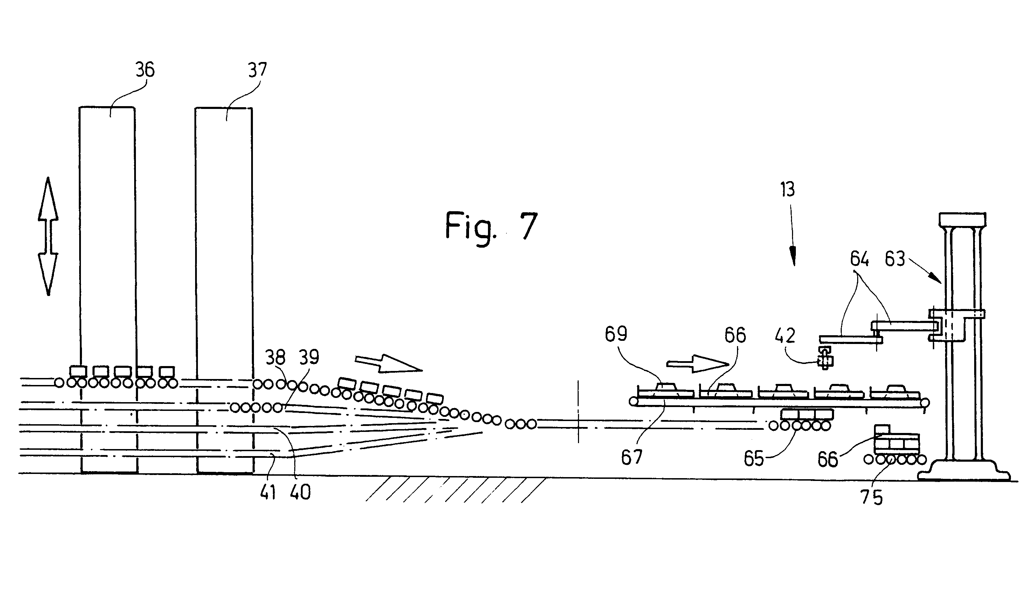

Die Fig. 6 und 7 zeigen gemeinsam eine Ansicht der Gesamtanlage der Fig. 1 aus der Richtung des Pfeils B. Dabei sind deutlich erkennbar die den Depalettierungsstationen 10 bis 12 zugeordneten Sortenspeichern 29 bis 31, 32 bis 34 bzw. 35 bis 37. Weiter erkennbar sind die allen Sortenspeichern 29 bis 37 zugeordneten Gruppenförderer 38 bis 41, die als Rollenförderer ausgebildet sind. Diese Gruppenförderer 38 bis 41 dienen der Aufnahme der für die Bildung einer Gruppe notwendigen Anzahl von Gegenständen 42 der verschiedenen Sorten, also von Gegenständen aus den jeweils betroffenen Sortenspeichern 29 bis 37. Die Freigabe von Gegenständen 42 außer den Sortenspeichern 29 bis 37 erfolgt unter der Einwirkung einer entsprechenden Steuereinheit so, daß die benötigte Anzahl von Gegenständen 42 der verschiedenen Sorten unter Einhaltung der für die Gruppenbildung erforderlichen Reihenfolge von den Sortenspeichern 29 bis 37 derart freigegeben wird, daß spätestens hinter dem letzten Sortenspeicher 37 alle für die Bildung einer Gruppe benötigten einzelnen Gegenstände 42 in sogenannter Dichtlage auf einem der Gruppenförderer 38 bis 41 aufliegen, und zwar demjenigen der Gruppenförderer 38 bis 41, der zu derjenigen Gruppenbildungsstation 13 bis 16 führt, in der die gerade betroffene Gruppe später gebildet werden soll. Für die Freigabe der aus den einzelnen Sortenspeichern 29 bis 37 abzurufenen Gegenstände an die Gruppenförderer 38 bis 41 dienen am Ende des in Fig. 5 ersichtlichen Umlaufförderers 20b, der eine Fortsetzung des Sortenförderers 20 darstellt, vorgesehene Förderweichen 54 bis 62, die aus Fig. 1 ersichtlich sind. Diese Förderweichen 54 bis 62 können in der Weise realisiert sein, daß der jeweils zugehörige Umlaufförderer, also bspw. zum Sortenspeicher 29 der Umlaufförderer 20b, in Höhenrichtung verschwenkbar ist.

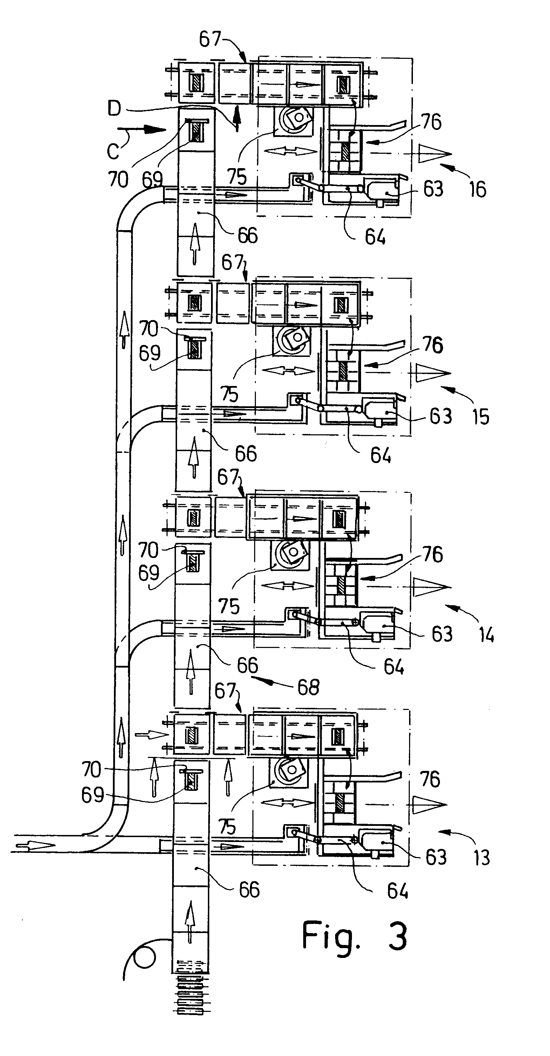

Fig. 7 läßt schließlich im rechten Teil eine Gruppenbildungsstation, bspw. die Gruppenbildungsstation 13, erkennen. An jeder der Gruppenbildungsstationen 13 bis 16 ist in der dargestellten Weise ein aufnahme- und absetzzwecken dienendes Hub- und Schwenkwerk 63 mit einem auf- und abbewegbaren Schwenkarm 64 zur Erfassung eines zugeführten Gegenstands 42 aus einem Bereitstellungsbereich 65 und zum Absetzen auf einer Unterlage 66 einer zu bildenden Gruppe von Gegenständen 42 vorgesehen. Die Gruppenbildung erfolgt dabei zugleich in der Position, in der aus fertigen Gruppen eine Palette aufgebaut wird. Dies bedeutet, daß die Palettenbildung sozusagen lagenweise erfolgt, indem eine Gruppe auf der vorausgehenden zusammengestellt wird. Die Unterlagen 66 werden dabei über einen Abzweigförderer 67 in den Arbeitsbereich verbracht. Zugeführt werden die Unterlagen 66 dem Abzweigförderer 67 über den in Fig. 3 deutlich erkennbaren Unterlagenförderer 68.

Die Unterlagen 66 weisen in ihrem zentralen Bereich, wie insbesondere aus Fig. 3 im übrigen aber auch aus Fig. 7 ersichtlich ist, eine Erhebung 69 auf, auf die im Laufe des Transports der Unterlagen 66 auf dem Unterlagenförderer 68 dort vorgesehene Sperren 70 zur Einwirkung kommen, um den Transport der Unterlagen 66 auf dem Unterlagenförderer 68 und die Übergabe an den Abzweigförderer 67 zu steuern.

Der in Fig. 8 in Ansicht aus der Richtung des Pfeils B der Fig. 2 dargestellte Sortenspeicher 29 läßt im unteren Teil den aus Fig. 5 ersichtlichen Umlaufförderer 20a erkennen, der die Fortsetzung des Sortenförderers 20 bildet und grundsätzlich eigentlicher Bestandteil des Sortenförderers insgesamt ist. Alle Sortenspeicher 29 bis 37 sind ebenso wie der Sortenspeicher 29 als Etagenspeicher ausgebildet und besitzen hierzu zwei Umlaufwerke 71 mit einer Vielzahl von Mitnehmern 72. Diese Mitnehmer 72 dienen der Aufnahme von Gegenständen 42 vom Umlaufförderer 20a und bei entsprechend hoher Anordnung innerhalb des Sortenspeichers 29 zur Bildung von Zwischenspeicheretagen. Die in den Etagen aufgenommenen Gegenstände 42 sind durch entsprechende Bewegung der Umlaufwerke 71 des Sortenspeichers 29 weiter nach oben verbringbar oder bei entgegengesetzter Bewegung nach unten verbringbar, um schließlich Gegenstände 42 wieder auf dem Umlaufförderer 20a abzusetzen, der im übrigen zugleich eine Durchlaufetage des Sortenspeichers 29, bildet.

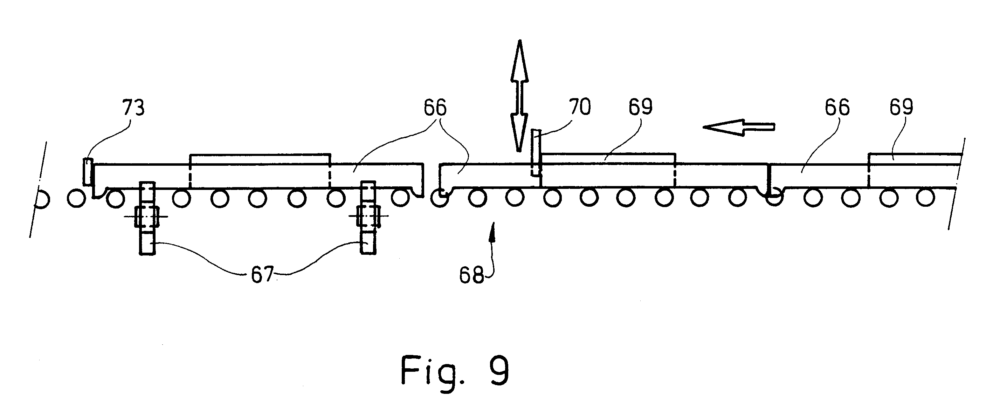

Fig. 9 zeigt aus der Richtung des Pfeils C der Fig. 3 eine Teilansicht des Unterlagenförderers 68. Dieser ist als Rollenförderbahn ausgebildet und dient der Zuführung der mit einer zentralen Erhebung 69 ausgestatteten Unterlagen 66 zu den einzelnen Gruppenbildungsstationen 13 bis 16. Im Bereich jeder Gruppenbildungsstation 13 bis 16 ist ein Abzweigförderer 67 vorgesehen, der die Unterlagen 66 vom Unterlagenförderer 68 übernimmt. Zur Steuerung der zeitlich richtigen Übernahme der Unterlagen 66 vom Unterlagenförderer 68 durch den Abzweigförderer 67 dienen einerseits die bereits aus Fig. 3 ersichtlichen Sperren 70 und andererseits weitere Sperren 73. Dabei stellen die Sperren 73 einen Anschlag gegen den Weiterlauf einer Unterlage 66 über den Anschluß des Abzweigförderers 67 hinaus dar, während die Sperren 70 eine Sperre gegen den Weitertransport von Unterlagen 66 jeweils zu einem der Abzweigförderer 67 darstellen. Die Abzweigförderer 67 sind zweckmäßigerweise als Zahnriemenförderer ausgebildet, wobei die nicht im Detail dargestellten Zahnriemen über Umlaufrollen geführt sind.

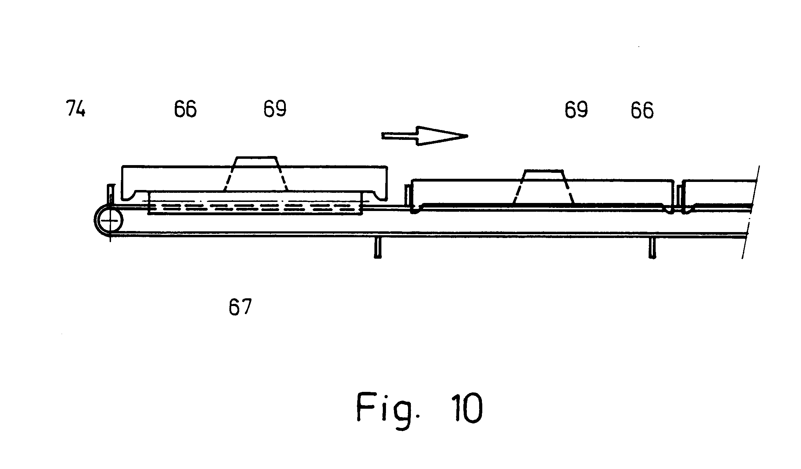

Fig. 10 zeigt einen Teilabschnitt eines Abzweigförderers 67 aus der Richtung des Pfeils D der Fig. 3. Zugleich sind die in Verbindung mit Fig. 9 bereits angesprochenen Zahnriemen erkennbar, die über Umlenkrollen geführt den Abzweigförderer 67 bilden. In der dargestellten Weise werden die Unterlagen 66 mittels des Abzweigförderers 67 gegen einen an dessen Ende vorgesehenen Anschlag 74 geführt. Die jeweils am Anschlag anliegende Unterlage 66 wird mittels eines aus Fig. 3 ersichtlichen Umsetzzwecken dienenden Hub- und Schwenkwerks 75 erfaßt, vom Abzweigförderer 67 abgehoben und im Paletten- bzw. Gruppenbildungsbereich 76 abgesetzt, der in Fig. 3 und in Fig. 7 ersichtlich ist.

## Patentansprüche

1. Anlage zum Fördern und Umordnen von Gegenständen (42) unterschiedlicher Sorten, die auf Paletten mit einer bestimmten Gegenstandssorte zumindest je Lage abgesetzt sind, mit einer Depalettierungsstation (10), zu Sortenspeichern (29 bis 37) führenden Fördernmitteln und von den Sortenspeichern (29 bis 37) zu einer Gruppenbildungsstation (19) führenden Fördermitteln, **gekennzeichnet durch** folgende Merkmale:
- es sind mehrere Depalettierungsstationen (10 bis 12) vorgesehen, denen jeweils mehrere Sortenspeicher (29 bis 37) zugeordnet sind,
- den Gruppenbildungsstationen (13 bis 16) sind über Gruppenfördermittel (38 bis 41) aus jedem der vorgesehenen Sortenspeicher (29 bis 37) Gegenstände zuführbar.

2. Anlage nach Anspruch 1, dadurch gekennzeichnet, daß zur Überführung der Gegenstände (42) aus den Sortenspeichern (29 bis 37) auf die Gruppenfördermittel (38 bis 41) den Sortenspeichern (29 bis 37) je ein Sortenfördermittel (20b) nachgeordnet ist.

3. Anlage nach Anspruch 2, dadurch gekennzeichnet, daß die Sortenfördermittel (20b) mit einem Ende in der Höhe verstellbar, insbesondere verschwenkbar ausgebildet sind zur wahlweisen Überführung der Gegenständen (42) auf eines der Gruppenfördermittel (38 bis 41).

4. Anlage nach Anspruch 2 oder 3, dadurch gekennzeichnet, daß zum Anschluß der Sortenfördermittel (20b) an jedes Gruppenfördermittel (38 bis 41) jeweils Förderweichen (54 bis 62) vorgesehen sind.

5. Anlage nach mindestens einem der Ansprüche 1 bis 4, dadurch gekennzeichnet, daß den Sortenspeichern (29 bis 37) und deren Sortenfördermitteln (20 bis 28) so viele vorzugsweise übereinander angeordnete Gruppenfördermittel (38 bis 41) nachgeordnet sind, wie Gruppenbildungsstationen (13 bis 16) vorgesehen sind.

6. Anlage nach mindestens einem der Ansprüche 1 bis 5, dadurch gekennzeichnet, daß jede Gruppenbildungsstation (13 bis 16) über eine erste Förderbahn (68) zur Zuführung von Gruppenunterlagen (66) und eine zweite Förderbahn zur Zuführung von Gegenständen (42) von den Gruppenfördermitteln (38 bis 41) in die Arbeitsbereiche eines Hub- und Schwenkwerks (75) für die Unterlagen (66) und eines Hub- und Schwenkwerks (63) für die Gegenstände (42) verfügt.

7. Anlage nach Anspruch 6, dadurch gekennzeichnet, daß alle Gruppenbildungsstationen (13 bis 16) eine, vorzugsweise als Rollenbahn ausgebildete, gemeinsame erste Förderbahn (68) aufweisen, von der je Gruppenbildungsstation (13 bis 16) ein Abzweigförderer (67) ausgeht, der bis in den Arbeitsbereich des Hub- und Schwenkwerks (75) geführt ist, und vorzugsweise als Riementriebförderer ausgebildet ist.

8. Anlage nach mindestens einem der Ansprüche 1 bis 7, dadurch gekennzeichnet, daß jede Gruppenbildungsstation (13 bis 16) zugleich als Palettierungsstation ausgebildet ist, in der die je auf einer Unterlage (66) gebildeten Gruppen palettierbar sind.

9. Anlage nach mindestens einem der Ansprüche 1 bis 8, dadurch gekennzeichnet, daß jeder Sortenspeicher (29 bis 37) als Etagenstapler ausgebildet ist, dem ein an die Einzelfördermittel (17 bis 19) der Depalettierungsstation (10 bis 12) anschließendes Sortenfördermittel (20 bis 28), insbesondere als Rollenförderer, zugeordnet ist, dessen innerhalb des Sortenspeichers (29 bis 37) befindlicher Förderstreckenabschnitt (22a) zugleich die unterste Etage (Durchlaufetage) des Etagenstaplers bildet und der sich hinter dem Sortenspeicher (29 bis 37) fortsetzt.

10. Anlage nach Anspruch 9, dadurch gekennzeichnet, daß der Etagenstapler aus zwei gegenläufig bewegbaren Umlaufwerken (71) mit Mitnehmern (72) besteht, die beim Vorbeilauf an dem die Durchlaufetage bildenden Förderstreckenabschnitt (22a) die dort befindlichen Gegenstände (42) aufnehmen und in eine höhere Ebene mitnehmen und bei im Bedarfsfall entgegengesetzter Bewegung Gegenstände (42) einer oberen Ebene auf dem die Durchlaufetage bildenden Förderstreckenabschnitt (22a) des Sortenfördermittels (22) absetzen.

11. Anlage nach mindestens einem der vorausgehenden Ansprüche, gekennzeichnet durch eine Depalettierungsstation zum innerhalb der Lagen gegenstandsweisen Depalettieren.

12. Anlage nach mindestens einem der vorausgehenden Ansprüche, dadurch gekennzeichnet, daß jeder Depalettierungsstation (10 bis 12) soviele Einzelfördermittel (43 bis 46) zueinander parallel nachgeordnet sind, wie innerhalb einer Palettenlage quer zu den Einzelfördermitteln (43 bis 46) nebeneinander liegende Reihen von Gegenständen (42) vorgesehen sind.

13. Anlage nach Anspruch 12, dadurch gekennzeichnet, daß jedes der mehreren Einzelfördermittel (43 bis 46) gegenüber den jeweils übrigen mit unterschiedlicher Fördergeschwindigkeit derart betreibbar ist, daß die von den mehreren Einzelfördermitteln (43 bis 46) aufgenommenen depalettierten Gegenstände (42) weiterführbar sind, ohne daß auf einander benachbarten Einzelfördermitteln (43 bis 46) transportierte Gegenstände (42) miteinander kollidieren.

14. Anlage nach Anspruch 12 oder 13, dadurch gekennzeichnet, daß die mehreren Einzelfördermittel (43 bis 46) im Bereich des Endes ihrer Förderstrecke gemeinsam zwischen zwei im Förderbereich der Gegenstände (42) angeordneten Seitenführungen (48, 49) angeordnet sind, deren gegenseitiger Abstand fortlaufend bis auf die Transportbreite der Gegenstände (42) verkleinert ist.

15. Anlage nach Anspruch 14, dadurch gekennzeichnet, daß hinter den Seitenführungen (48, 49) eine der Anzahl der in einer Depalettierungsstation (10 bis 12) zu depalettierenden Gegenstandssorten entsprechende Anzahl von Sortenfördermitteln (20 bis 22, 23 bis 25, 26 bis 28) vorgesehen ist, die über eine Vielfach-Förderweiche (50) an den Endbereich der Seitenführungen (48, 49) anschließen.

16. Anlage nach mindestens einem der Ansprüche 1 bis 15, dadurch gekennzeichnet, daß an jeder Depalettierungsstation (10 bis 12) mindestens eine Hubeinrichtung zum Anheben der zu depalettierenden Gegenständen (42) vorgesehen ist, wobei vorzugsweise jede Hubeinrichtung aus einer Position über der Depalettierungsstation (10 bis 12) zu den Einzelfördermitteln (17 bis 19) hin und wieder zurück bewegbar ist.

17. Anlage nach Anspruch 16, dadurch gekennzeichnet, daß jeder Hubeinrichtung eine Saugeinrichtung zugeordnet ist, die vorzugsweise anhebbar und wieder absenkbar ist, und die mit der den Einzelfördermitteln (17 bis 19) zugewandten Fläche der zu depalettierenden Gegenständen (42) zur Einwirkung bringbar ist.

18. Anlage nach Anspruch 17, dadurch gekennzeichnet, daß die Saugeinrichtung aus einer Position im Bereich der Depalettierungsstation (10 bis 12) zu den Einzelfördermitteln (17 bis 19) hin und wieder zurück bewegbar ist.

19. Anlage nach mindestens einem der Ansprüche 1 bis 18, dadurch gekennzeichnet, daß an jeder Depalettierungsstation (10 bis 12) ein Schieber (47) zum Herunterschieben einer Palettenlage auf die nachgeordneten Einzelfördermittel (17 bis 19) vorgesehen ist.

20. Anlage nach mindestens einem der Ansprüche 1 bis 19, dadurch gekennzeichnet, daß an jeder Depalettierungsstation (10 bis 12) eine Drucklufteinrichtung vorgesehen ist, über die Druckluft an die Unterseite der zu depalettierenden Gegenstände (42) in solchem Ausmaß führbar ist, daß die Gegenstände (42) anhebbar sind.

21. Verfahren zum Fördern und Umordnen von Gegenständen (42) unterschiedlicher Sorten, die auf Paletten mit einer bestimmten Gegenstandssorte zumindest je Lage abgesetzt sind, wobei die Gegenstände (42) in einer Depalettierungsstation (10 bis 12) lagenweise depalettiert und über Fördermittel sortenrein Sortenspeichern (29 bis 37) zugeführt werden und wobei die Gegenstände (42) über weitere Fördermittel von den Sortenspeichern (29 bis 37) einer Gruppenbildungsstation (13 bis 16) zugeführt werden, dadurch gekennzeichnet, daß jeder in den Sortenspeichern (29 bis 37) lagernde Gegenstand wahlweise einer von mehreren vorgesehenen Gruppenbildungsstationen (13 bis 16) zugeführt wird.

22. Verfahren nach Anspruch 21, dadurch gekennzeichnet, daß die von den Gruppenbildungsstationen benötigten Gegenstände in der benötigten Anzahl und notwendigen Reihenfolge von den Sortenfördermittel bzw. Sortenspeichern nach Abruf durch die Gruppenbildungsstationen freigegeben werden.

23. Verfahren nach mindestens einem der Ansprüche 21 und 22, dadurch gekennzeichnet, daß den Gruppenbildungsstationen Unterlagen für die zu bildenden Gruppen zugeführt werden.

24. Verfahren nach mindestens einem der Ansprüche 21 bis 23, dadurch gekennzeichnet, daß die den Gruppenbildungsstationen zugeführten Gegenstände angehoben und verschwenkt und anschließend auf die Unterlagen abgesetzt werden.

25. Verfahren nach mindestens einem der Ansprüche 21 bis 24, dadurch gekennzeichnet, daß die fertigen Gruppen samt ihrer Unterlage palettiert werden.

26. Verfahren nach mindestens einem der Ansprüche 21 bis 25, dadurch gekennzeichnet, daß die Paletten innerhalb der Lagen gegenstandsweise depalettiert werden.

27. Verfahren nach mindestens einem der Ansprüche 21 bis 26, dadurch gekennzeichnet, daß jeder Depalettierungsstation nur Paletten einer bestimmten Anzahl unterschiedlicher Gegenstandssorten und nur mit Gegenständen der zugehörigen Sorten zugeführt werden.

28. Verfahren nach mindestens einem der Ansprüche 21 bis 27, dadurch gekennzeichnet, daß bei dem Depalettieren die Gegenstände jeder Reihe einer Palettenlage an ein der Reihe zugeordnetes Einzelfördermittel abgegeben werden, wobei vorzugsweise die Einzelfördermittel verschiedener Reihen der Palettenlagen mit unterschiedlichen Fördergeschwindigkeiten arbeiten.

29. Verfahren nach Anspruch 28, dadurch gekennzeichnet, daß die unterschiedlichen Fördergeschwindigkeiten so aufeinander abgestimmt werden, daß die Gegenstände unterschiedlicher Reihen einer Palettenlage auf den jeweils zugehörigen Einzelfördermitteln transportiert werden, ohne die auf benachbarten Einzelfördermittel transportierten Gegenstände miteinander zu kollidieren.

30. Verfahren nach Anspruchs 28 oder 29, dadurch gekennzeichnet, daß alle an die verschiedenen Einzelfördermittel einer Depalettierungsstation abgegebenen Gegenstände zu einem einzigen Förderstrom zusammengeführt und in diesem dem zugehörigen Sortenfördermittel zugeführt werden.

31. Verfahren nach Anspruch 30, dadurch gekennzeichnet, daß zur Zusammenführung der Gegenstände zu einem einzigen Förderstrom die Einzelfördermittel die Gegenstände an Führungen vorbeibewegen, die die Gegenstände auf den Einzelfördermitteln quer zur Förderrichtung verschieben.

32. Verfahren nach mindestens einem der Ansprüche 21 bis 31, dadurch gekennzeichnet, daß die Gegenstände vor dem Depalettieren an ihrer dem zugehörigen Einzelfördermittel zugewandten Seite, insbesondere der Vorderseite, angehoben werden.

33. Verfahren nach Anspruch 32, dadurch gekennzeichnet, daß die Gegenstände während des Anhebens ihrer Vorderseite um ihre rückwärtige Kante gekippt werden, wobei vorzugsweise auf die Vorderseite der Gegenstände eine Saugeinrichtung zur Einwirkung gebracht wird.

34. Verfahren nach mindestens einem der Ansprüche 21 bis 33, dadurch gekennzeichnet, daß die den Sortenspeichern zugeführten Gegenstände durch die Sortenspeicher hindurch bis gegen einen Anschlag am Ende der Sortenförderer geführt werden, wobei der dann innerhalb der Sortenspeicher befindliche Teil der zugeführten Gegenstände innerhalb der Sortenspeicher angehoben und anschließend der jeweils noch vor den Sortenspeichern befindliche Teil der zugeführten Gegenstände in die Sortenspeicher eingeführt und dort ebenfalls angehoben wird.

## Claims

1. Installation for the conveyance and rearrangement of articles (42) of different sorts, which are deposited on pallets having a specific sort of article at least in each layer, with a depalletizing station (10), with conveying means leading to sort stores (29 to 37) and with conveying means leading from the sort stores (29 to 37) to a group-forming station (19), characterized by the following features:
- there is provided a plurality of depalletizing stations (10 to 12), to each of which a plurality of sort stores (29 to 37) is assigned,
- articles can be fed to the group-forming stations (13 to 16) via group-conveying means (38 to 41) from each of the sort stores (29 to 37) provided.

2. Installation according to Claim 1, characterized in that the sort stores (29 to 37) are each followed by a sort-conveying means (20b) for transferring the articles (42) out of the sort stores (29 to 37) onto the group-conveying means (38 to 41).

3. Installation according to Claim 2, characterized in that the sort-conveying means (20b) are made adjustable, especially pivotable, in height at one end, for the selective transfer of the articles (42) onto one of the group-conveying means (38 to 41).

4. Installation according to Claim 2 or 3, characterized in that conveyor switches (54 to 62) are provided for respectively connecting the sort-conveying means (20b) to each group-conveying means (38 to 41).

5. Installation according to at least one of Claims 1 to 4, characterized in that the sort stores (29 to 37) and their sort-conveying means (20 to 28) are followed by as many group-conveying means (38 to 41), preferably arranged above one another, as there are group-forming stations (13 to 16).

6. Installation according to at least one of Claims 1 to 5, characterized in that each group-forming station (13 to 16) has a first conveyor track (68) for feeding group bases (66) and a second conveyor track for feeding articles (42) from the group-conveying means (38 to 41) into the working regions of a lifting and pivoting unit (75) for the bases (66) and of a lifting and pivoting unit (63) for the articles (42).

7. Installation according to Claim 6, characterized in that all the group-forming stations (13 to 16) have a common first conveyor track (68), preferably designed as a roller track, from which starts, for each group-forming station (13 to 16), a branch-off conveyor (67) which is guided into the working region of the lifting and pivoting unit (75), and is preferably designed as a belt-drive conveyor.

8. Installation according to at least one of Claims 1 to 7, characterized in that each group-forming station (13 to 16) is designed at the same time as a palletizing station, in which the groups, each formed on a base (66), can be palletized.

9. Installation according to at least one of Claims 1 to 8, characterized in that each sort store (29 to 37) is designed as a rack-type stacker assigned a sort-conveying means (20 to 28), especially as a roller conveyor, which follows the individual conveying means (17 to 19) of the depalletizing station (10 to 12) and of which the conveying-zone portion (22a) located within the sort store (29 to 37) forms at the same time the bottom-most rack (run-through rack) of the rack-type stacker and which is continued after the sort store (29 to 37).

10. Installation according to Claim 9, characterized in that the rack-type stacker consists of two oppositely movable rotary mechanisms (71) with drivers (72) which, during the run past the conveying-zone portion (22a) forming the run-through rack, receive the articles (42) located there and drive them to a higher plane and if, as required, there is movement in the opposite direction, deposit articles (42) of an upper plane on that conveying-zone portion (22a) of the sort-conveying means (22) forming the run-through rack.

11. Installation according to at least one of the preceding claims, characterized by a depalletizing station for depalletization according to articles in the layers.

12. Installation according to at least one of the preceding claims, characterized in that each depalletizing station (10 to 12) is followed by as many individual conveying means (43 to 46) parallel to one another as there are rows of articles (42) lying next to one another within a pallet layer transversely relative to the individual conveying means (43 to 46).

13. Installation according to Claim 12, characterized in that each of the plurality of individual conveying means (43 to 46) can be driven at a different conveying speed from that of the others, in such a way that the depalletized articles (42) received by the plurality of individual conveying means (43 to 46) can be conveyed further, without articles (42) transported on mutually adjacent individual conveying means (43 to 46) colliding with one another.

14. Installation according to Claim 12 or 13, characterized in that the plurality of individual conveying means (43 to 46), in the region of the end of their conveying zone, are arranged together between two lateral guides (48, 49) which are located in the conveying region of the articles (42) and the mutual spacing of which is reduced continuously to the transport width of the articles (42).

15. Installation according to Claim 14, characterized in that behind the lateral guides (48, 49) there is a number, corresponding to the number of sorts of articles to be depalletized in a depalletizing station (10 to 12), of sort-conveying means (20 to 22, 23 to 25, 26 to 28) which adjoin the end region of the lateral guides (48, 49) via a multiple conveyor switch (50).

16. Installation according to at least one of Claims 1 to 15, characterized in that at each depalletizing station (10 to 12) there is at least one lifting device for raising the articles (42) to be depalletized, each lifting device preferably being movable forwards out of a position above the depalletizing station (10 to 12) to the individual conveying means (17 to 19) and back again.

17. Installation according to Claim 16, characterized in that each lifting device is assigned a suction device, which can preferably be raised and lowered again, which can be brought into action with that face of the articles (42) to be depalletized which faces the individual conveying means (17 to 19).

18. Installation according to Claim 17, characterized in that the suction device is movable forwards out of a position in the region of the depalletizing station (10 to 12) to the individual conveying means (17 to 19) and back again.

19. Installation according to at least one of Claims 1 to 18, characterized in that at each depalletizing station (10 to 12) there is a slide (47) for pushing a pallet layer down onto the following individual conveying means (17 to 19).

20. Installation according to at least one of Claims 1 to 19, characterized in that at each depalletizing station (10 to 12) there is a compressed-air device, via which compressed air can be conveyed to the underside of the articles (42) to be depalletized, to such an extent that the articles (42) can be raised.

21. Process for the conveyance and rearrangement of articles (42) of different sorts, which are deposited on pallets having a specific sort of article at least in each layer, the articles (42) being depalletized in layers in a depalletizing station (10 to 12) and being fed fully sorted to sort stores (29 to 37) via conveying means, and the articles (42) being fed from the sort stores (29 to 37) to a group-forming station (13 to 16) via further conveying means, characterized in that each article being stored in the sort stores (29 to 37) is fed selectively to one of a plurality of group-forming stations (13 to 16) provided.

22. Process according to Claim 21, characterized in that the articles required by the group-forming stations are released in the requisite number and necessary sequence from the sort-conveying means or sort stores after being called up by the group-forming stations.

23. Process according to at least one of Claims 21 and 22, characterized in that bases for the groups to be formed are fed to the group-forming stations.

24. Process according to at least one of Claims 21 to 23, characterized in that the articles fed to the group-forming stations are raised and pivoted and subsequently deposited on the bases.

25. Process according to at least one of Claims 21 to 24, characterized in that the finished groups, together with their base, are palletized.

26. Process according to at least one of Claims 21 to 25, characterized in that the pallets are depalletized according to articles within the layers.

27. Process according to at least one of Claims 21 to 26, characterized in that only pallets of a specific number of different sorts of articles and only with articles of the associated sorts are fed to each depalletizing station.

28. Process according to at least one of Claims 21 to 27, characterized in that, during depalletization, the articles of each row of a pallet layer are delivered to an individual conveying means assigned to the row, the individual conveying means of different rows of the pallet layers preferably working at different conveying speeds.

29. Process according to Claim 28, characterized in that the different conveying speeds are coordinated with one another in such a way that the articles of different rows of a pallet layer are transported to the respective associated individual conveying means, without the articles transported on adjacent individual conveying means colliding with one another.

30. Process according to Claim 28 or 29, characterized in that all the articles delivered to the various individual conveying means of a depalletizing station are combined to form a single conveying stream and in this are fed to the associated sort-conveying means.

31. Process according to Claim 30, characterized in that, combining the articles to form a single conveying stream the individual conveying means move the articles past guides which shift the articles on the individual conveying means transversely relative to the conveying direction.

32. Process according to at least one of Claims 21 to 31, characterized in that, before depalletization, the articles are raised on their side facing the associated individual conveying means, in particular the front side.

33. Process according to Claim 32, characterized in that the articles, during the raising of their front side, are tilted about their rear edge, a suction device preferably being brought into action on the front side of the articles.

34. Process according to at least one of Claims 21 to 33, characterized in that the articles fed to the sort stores are guided through the sort stores up against a stop at the end of the sort conveyor, those of the fed articles then located inside the sort stores being raised within the sort stores, and subsequently those of the fed articles still located in front of the sort stores being introduced into the sort stores and likewise being raised there.

## Revendications

1. Installation pour transporter et repositionner des objets (42) de différentes catégories, déposés sur des palettes, avec au moins pour chaque couche, une catégorie d'objets déterminée, avec un poste de dépalettisation (10), des moyens de transport conduisant à des entrepôts par catégorie (29 à 37) et des moyens de transport menant des entrepôts par catégorie (29 à 37) à un poste de formation de groupes (19), caractérisée par le fait que :
- plusieurs postes de dépalettisation (10 à 12) sont prévus, à chacun desquels sont associés plusieurs entrepots par catégorie (29 à 37),
- des objets provenant de chacun des entrepôts par catégorie (29 à 37) prévus peuvent être amenés aux postes de formation de groupes (13 à 16), par l'intermédiaire de moyens de transport de groupes (38 à 41).

2. Installation selon la revendication 1, caractérisée en ce qu'un moyen de transport par catégorie (20b) est disposé en aval de chaque entrepôt par catégorie (29 à 37), pour transférer les objets (42) depuis les entrepôts par catégorie (29 à 37) sur les moyens de transport de groupes (38 à 41).

3. Installation selon la revendication 2, caractérisée en ce que les moyens de transport par catégorie (20b) sont réalisés avec une extrémité réglable en hauteur, en particulier pivotante, afin de transférer, au choix, des objets (42) sur un des moyens de transport de groupes (38 à 41).

4. Installation selon la revendication 2 ou 3, caractérisée en ce que pour raccorder les moyens de transport par catégorie (20b) des aiguillages de transport (54 à 62) sont prévus sur chacun des moyens de transport de groupes (38 à 41).

5. Installation selon au moins l'une des revendications 1 à 4, caractérisée en ce que sont disposés en aval des entrepôts par catégorie (29 à 37) et de leurs moyens de transport par catégorie (20 à 28) , autant de moyens de transport de groupes (38 à 41), disposés, de préférence, les uns sur les autres que de poste de formation de groupes (13 à 16).

6. Installation selon au moins l'une des revendications 1 à 5, caractérisée en ce que chaque poste de formation de groupes (13 à 16) dispose d'une première bande de transport (68) pour amener des pièces de base de groupes (66) et d'une deuxième bande de transport pour amener des objets (42) des moyens de transport de groupes (38 à 41), aux zones de travail d'un mécanisme de levage ou de pivotement (75), pour les pièces de base des groupes (66) et d'un mécanisme de levage et de pivotement (63) pour les objets (42).

7. Installation selon la revendication 6, caractérisée en ce que tous les postes de formation de groupes (13 à 16) présentent une première bande de transport (68) commune, réalisée de préférence sous forme de transporteur à rouleaux, d'où part pour chaque poste de formation de groupes (13 à 16) un transporteur de bifurcation (67) qui est mené jusqu'à la zone de travail du mécanisme de levage et de pivotement (75) et est réalisé, de préférence, sous forme de transporteur à actionnement par courroies.

8. Installation selon au moins l'une des revendications 1 à 7, caractérisée en ce que, chaque poste de formation de groupes (13 à 16) est réalisé également sous forme de poste de palettisation dans lequel chacun des groupes formés peut être palettisé sur une pièce de base (66).

9. Installation selon au moins l'une des revendications 1 à 8, caractérisée en ce que chaque entrepôt par catégorie (29 à 37) est réalisé en forme d'élévateur à étages, auquel est associé un moyen de transport par catégories (20 à 28), en particulier comme transporteur à rouleaux, se raccordant au moyen de transport respectif (17 à 19) du poste de palettisation (10 à 12) et dont la section de voie de transport (22a), se trouvant à l'intérieur de l'entrepôt par catégorie (29 à 37), forme simultanément l'étage le plus bas (étage de passage) de l'élévateur à étage et elle se poursuit derrière l'entrepôt par catégorie (29 à 37).

10. Installation selon la revendication 9, caractérisée en ce que l'élévateur à étage composé de deux mécanismes en circulation (71),mobiles en sens opposés, avec des organes d'entraînement (72), qui reçoivent, lors du passage devant la section de voie de transport (22a) formant l'étage de passage, les objets (42) s'y trouvant et les soulevant en les amenant dans un plan plus élevé et, lors d'un mouvement inverse en cas de besoin, déposent les objets (42) d'un plan de niveau supérieur sur une section de voie de transport (22a), formant l'étage de passage du moyen de transport par catégorie (22).

11. Installation selon au moins l'une des revendications précédentes, caractérisée par un poste de dépalettisation pour dépalettiser par objet à l'intérieur des couches.

12. Installation selon au moins l'une des revendications précédentes, caractérisée en ce qu'en aval de chaque poste de dépalettisation (10 à 12) sont disposés, parallèles entre eux, autant de moyens de transport respectifs (43 à 46) que sont prévues de rangées d'objets (42), se trouvant les unes à côté ces autres, à l'intérieur d'une couche de palettisation, transversalement par rapport aux moyens de transport respectifs (43 à 46).

13. Installation selon la revendication 12, caractérisée en ce que chacun des différents moyens de transport respectifs (43 à 46), peut être entraîné à une vitesse de transport différente des autres, de telle sorte que les objets (42) dépalettisés reçus par les différents moyens de transport (43 à 46) respectifs peuvent continuer à être transportés, sans que les objets (42) transportés, se trouvant sur des moyens de transport respectifs (43 à 46) voisins les uns les autres, entrent en collision.

14. Installation selon la revendication 12 ou 13, caractérisée en ce que les différents moyens de transport respectifs (43 à 46) sont disposés, dans la zone de l'extrémité de leur voie de transport, ensemble entre deux guidages latéraux (48,49), disposés dans la zone de transport des objets (42), guidages dont la distance réciproque est réduite continuellement jusqu'à la largeur de transport des objets (42).

15. Installation selon la revendication 14, caractérisée en ce que, derrière les guidages latéraux (48,49) est prévu un nombre de moyens de transport par catégorie (20 à 22, 23 à 25, 26 à 28) correspondant au nombre des catégories d'objets à dépalettiser dans un poste de dépalettisation (10 à 12), moyens de transport qui se raccordent à la zone d'extrémité des guidages latéraux par l'intermédiaire d'un aiguillage de transport (50) multiple.

16. Installation selon l'une des revendications 1 à 15, caractérisée en ce qu'à chaque poste de dépalettisation (10 à 12) est prévu au moins un dispositif de levage afin de soulever les objets (42) à dépalettiser de préférence chaque dispositif de levage étant déplaçable depuis une position, en passant au-dessus du poste de dépalettisation (10 à 12), jusqu'aux moyens de transport respectifs (17 à 19), avec un retour en sens inverse.

17. Installation selon la revendication 16, caractérisée en ce qu'à chaque dispositif de levage est associé un dispositif d'aspiration, qui est, de préférence, levable et de nouveau abaissable, et la surface, tournée vers les moyens de transport respectifs (17 à 19), des objets (42) à dépalettiser pouvant être mise en action.

18. Installation selon la revendication 17, caractérisée en ce que le dispositif d'aspiration est déplaçable depuis une position, située dans la zone du poste de dépalettisation (10 à 12), vers les moyens de transport respectifs (17 à 19) et retour, en sens inverse.

19. Installation selon au moins l'une des revendications 1 à 18, caractérisée en ce qU'à chaque poste de dépalettisation (10 à 12) est prévu un poussoir (47), pour pousser vers le bas une couche de palette sur les moyens de transport respectifs (17 à 19) disposés en aval.

20. Installation selon au moins l'une des revendications 1 à 19, caractérisée en ce qu'à chaque poste de dépalettisation (10 à 12), est prévu un dispositif à air comprimé, par l'intermédiaire duquel de l'air comprimé peut être amené sur la face inférieure des objets (42) à dépalettiser, en quantité telle que les objets (42) soient levables.

21. Procédé pour transporter et repositionner des objets (42) de différentes catégories, déposés sur des palettes avec au moins pour chaque couche, une catégorie d'objets déterminée, les objets (42) étant dépalettisés, par couches, dans un poste de dépalettisation (10 à 12) et étant amenés, par catégories, par l'intermédiaire d'un moyen de transport, à des entrepôts par catégorie (29 à 37) et les objets (42) étant amenés, par l'intermédiaire d'autres moyens de transport, depuis les entrepôts par catégorie (29 à 37) à un poste de formation de groupes (13 à 16), caractérisé en ce que chaque objet emmagasiné dans les entrepôts par catégorie (29 à 37) est amené, au choix, à l'un des différents postes de formation de groupes (13 à 16) prévus.

22. Procédé selon la revendication 21, caractérisé en ce que les objets nécessaires aux postes de formation de groupes sont libérés, en nombre nécessaire et dans l'ordre de succession nécessaire, par les moyens de transport de catégorie, ou les entrepôts par catégorie, selon une demande venant des postes de formation de groupes.

23. Procédé selon au moins l'une des revendications 21 et 22, caractérisé en ce que des pièces de base, pour les groupes à former, sont amenés aux postes de formation de groupes.

24. Procédé selon au moins l'une des revendications 21 à 23, caractérisé en ce que les objets amenés aux postes de formation de groupes sont soulevés et pivotent et sont déposés ensuite sur les pièces de base.

25. Procédé selon au moins l'une des revendications 21 à 24, caractérisé en ce que les groupes finis sont palettisés conjointement avec leur pièce de base.

26. Procédé selon au moins l'une des revendications 21 à 25, caractérisé en ce que les palettes sont dépalettisées, objet par objet, à l'intérieur des couches.

27. Procédé selon au moins l'une des revendications 21 à 26, caractérisé en ce que ne sont amenées, à chaque poste de dépalettisation, que des palettes d'un certain nombre de catégories d'objets différentes et seulement avec des objets de catégories afférentes.

28. Procédé selon au moins l'une des revendications 21 à 27, caractérisé en ce que, lors de la dépalettisation, les objets de chaque rangée d'une couche de palette sont déposés sur un moyen de transport respectif associé à la rangée, les moyens de transport des différentes rangées des couches de palette travaillant, de préférence, à des vitesses de transport différentes.

29. Procédé selon la revendication 28, caractérisé en ce que les différentes vitesses de transport sont déterminées, de telle sorte, les unes par rapport aux autres, que les objets des différentes rangées d'une couche de palette sont transportés sur des moyens de transport respectifs, afférents respectivement, sans que les objets transportés sur les moyens de transport respectifs voisins entrent en collision les uns avec les autres.

30. Procédé selon la revendication 28 ou 29, caractérisé en ce que tous les objets déposés sur les différents moyens de transport respectifs d'un poste de dépalettisation sont groupés en un flux de transport unique et sont amenés, dans celui-ci, au moyen de transport de catégorie afférent.

31. Procédé selon la revendication 30, caractérisé en ce que, pour grouper les objets en un flux de transport unique, les moyens de transport respectifs déplacent les objets sur des guidages, qui déplacent les objets sur les moyens de transport respectifs, transversalement par rapport à la direction du transport.

32. Procédé selon au moins l'une des revendications 21 à 31, caractérisé en ce que les objets sont soulevés, avant d'être dépalettisés, sur leur face tournée vers le moyen de transport respectif afférent, en particulier sur la face avant.

33. Procédé selon la revendication 32, caractérisé en ce que les objets, lorsqu'ils sont soulevés sur leur face avant, sont basculés autour de leur arête arrière, un dispositif d'aspiration étant mis en action, de préférence sur la face avant des objets.

34. Procédé selon au moins l'une des revendications 21 à 33, caractérisé en ce que les objets, amenés aux entrepôts par catégorie, sont guidés à travers les entrepôts par catégorie jusqu'à venir contre une butée se trouvant à l'extrémité des transporteurs de catégorie, la partie des objets amenés se trouvant alors à l'intérieur des entrepôts par catégorie, étant soulevée à l'intérieur des entrepôts par catégorie et, ensuite, la partie des objets amenés se trouvant respectivement encore devant les entrepôts par catégorie, étant introduite dans les entrepôts par catégorie et y étant également soulevée.
